# EUROPEAN PATENT SPECIFICATION

(11) **EP 4 368 981 B1**
(45) Date of publication and mention of the grant of the patent: **25.03.2026**
(21) Application number: 22940876.0
(22) Date of filing: 23.12.2022
(51) Int. Cl.: G01N 23/225, G01N 23/2204, G01N 23/2206, G01N 27/64, H01J 49/04, G01N 23/2252, B01L 9/00, G01N 1/00, G01N 35/00, H01J 49/40

(54) **INTEGRATED FESEM AND LDI-TOF-MS ANALYSIS SYSTEM**
INTEGRIERTES FESEM- UND LDI-TOF-MS-ANALYSESYSTEM
SYSTÈME INTÉGRÉ D'ANALYSE FESEM ET LDI-TOF-MS

(30) Priority: 03.05.2022 KR 20220054691
(43) Date of publication of application: 15.05.2024
(73) Proprietor: LG Energy Solution, Ltd., Seoul 07335 (KR)
(72) Inventor: KIM, Soeun, Daejeon 34122 (KR); YOUN, Yeu Young, Daejeon 34122 (KR); KIM, Minkyoung, Daejeon 34122 (KR); CHAE, Byung Joon, Daejeon 34122 (KR)
(74) Representative: Goddar, Heinz J.
(86) International application number: PCT/KR2022/021138
(87) International publication number: WO 2023/214637

(56) References cited:
- JP-A- 2001 153 760
- JP-A- 2001 153 760
- JP-A- 2010 067 468
- JP-A- 2011 237 292
- JP-A- 2014 086 250
- JP-A- H05 224 131
- KR-A- 20120 041 587
- KR-A- 20130 086 041
- US-A1- 2007 057 182
- US-A1- 2015 170 874
- TOUSIMIS: "Sample Holders for tousimis Critical Point Dryers", 19 February 2015 (2015-02-19), pages 1 - 10, XP093220111, Retrieved from the Internet <URL:https://web.archive.org/web/20150219232139/https://tousimis.com/critical_point_dryers/EM_sample_holders.html> [retrieved on 20241101]

## Description

### Technical Field

The present disclosure relates to an FESEM and LDI-TOF-MS integrated analysis system, and to an FESEM and LDI-TOF-MS integrated analysis system capable of FESEM analysis and LDI-TOF-MS analysis while maintaining a state of non-exposure to an atmosphere for a single sample for analysis.

### Background Art

Apparatuses for analyzing surfaces of a sample include FESEM and LDI-TOF-MS.

Unlike general scanning electron microscopes, the field-emission scanning electron microscope (FESEM) is an apparatus that injects accelerated electron beams from a field emission (FE) electron gun instead of a thermoelectron gun and detects signals such as secondary electrons, reflected electrons, and X-rays generated on the surfaces of the sample to display or record an enlarged image on a cathode-ray tube screen. By scanning the surface of the sample with fine electron beams in a two-dimensional x-y direction under a high-degree vacuum, it is possible to observe morphology of the sample and microstructures, especially the obtainable depth of focus of images is more than twice as that of optical microscopes, in addition to two times greater high resolution. In addition, it is possible to perform analysis on the surface morphology of the sample, microstructure observation, qualitative and quantitative analysis, distribution of constituting elements as well as identification of microcrystalline structures of the sample using EBSD(electron back scatter diffraction), grain boundaries, and analysis on crystal orientation, while the surface is observable without coating a nonconductive sample with a low vacuum detector or low voltage.

Laser desorption/ionization-time of flight-mass spectrometry (LDI-TOF-MS) irradiates the sample with a laser, ionizes the sample, and then transfers the ionized sample to a flight tube. At this time, the ionized sample materials are separated by flight time according to the mass, and the time reaching a detector varies.

Since FESEM is designed to formally identify the morphology and element distribution of the sample surface while LDI-TOF-MS is to formally determine distribution of intramolecular compounds of the sample surface, analysis data provided by the two systems is different. In particular, since it is limited to view Li elements with FESEM, there is a limitation in identifying distribution of trace amounts of Li on the surface of an electrode sample.

FESEM and LDI-TOF-MS are independent analysis systems, in that conventional analysis using the same have required transfer of a sample between the two systems.

When the analysis is performed on the same sample by transferring between the two systems, the sample must be transferred to a sample plate of LDI-TOF-MS following the FESEM analysis, which caused damage to the sample. For example, for FESEM analysis, the sample may be immobilized with an adhesive material such as a double-sided tape on the sample plate for FESEM. In this case, in order to perform further analysis on the same sample with LDI-TOF-MS, the adhesive material-immobilized sample is detached from the sample plate for FESEM and then reattached to a separate sample plate for LDI-TOF-MS. During the process, the sample is damaged, which may have adverse effects on the analysis results. In particular, in the case of samples that need to be maintained under a state unexposed to the atmosphere, there has been difficulty in maintaining the state of non-exposure to the atmosphere in the process of loading the sample onto the LDI-TOF-MS system following the FESEM analysis.

In addition, since the sample is measured (electron, laser, etc.) by separate measurement means in the FESEM analysis system and the LDI-TOF-MS respectively while the sample is rearranged during the transfer of the sample, a method or apparatus for measuring the same position or area on the sample is required in an attempt to perform the analysis under the same condition in both analysis systems.

Therefore, required is a system which is capable of preventing damage to the sample during the transfer between the two systems and performing analysis under the same condition (maintaining the state unexposed to an atmosphere, matching of analysis areas, etc.).

### Disclosure of the Invention

### Technical Goals

The present disclosure relates to an FESEM and LDI-TOF-MS integrated analysis system, and an object of the present disclosure is to provide an FESEM and LDI-TOF-MS integrated analysis system capable of FESEM analysis and LDI-TOF-MS analysis while maintaining a state of non-exposure to the atmosphere for a single sample for analysis.

### Technical Solutions

An integrated analysis system according to claim 1.

### Advantageous Effects

In an FESEM and LDI-TOF-MS integrated analysis system of the present disclosure, in performing FESEM and LDI-TOF-MS analysis on a single sample, it is possible to keep an analyzing position on a sample, prevent damage to the sample during transfer, and maintain a state of non-exposure to the atmosphere.

The FESEM and LDI-TOF-MS integrated analysis system of the present disclosure may be capable of LDI-TOF-MS analysis on the same area on the sample that is analyzed via FESEM by positioning marking.

In the FESEM and LDI-TOF-MS integrated analysis system of the present disclosure, it may be easy to maintain a state of the sample, such as maintenance of a state of non-exposure to the atmosphere in the transfer between two systems.

### Brief Description of Drawings

FIGS. 1a to 1c are block diagrams illustrating an FESEM and LDI-TOF-MS integrated analysis system of the present disclosure.
FIG. 2 is a floor plan illustrating a sample plate.
FIG. 3 is an exploded perspective view illustrating a first holder.
FIG. 4 is a floor plan illustrating a mounting plate.
FIG. 5a is a front view illustrating a stopper.
FIG. 5b is a cross-sectional view illustrating a stopper.
FIG. 6 is a front view illustrating a knob.
FIG. 7 is a cross-sectional view illustrating a state in which a stopper and a knob are assembled.
FIGS. 8a and 8b are cross-sectional views illustrating a state in which a mounting plate and a stopper are assembled.

### Best Mode for Carrying Out the Invention

An integrated analysis system according to claim 1 comprising
a first sample holder having a first closed space formed therein;
a second sample holder having a second closed space formed therein;
a first analyzing unit on which the first sample holder is mounted and in which a first analysis is performed on a sample for analysis;
a second analyzing unit on which the second sample holder is mounted and in which a second analysis is performed on the sample for analysis;
a sample plate which is mounted in the first closed space in the first sample holder or the second closed space in the second sample holder, wherein the sample for analysis is mounted on an upper surface of the sample plate; and
a glove box unit in which a sample for analysis transfer space is formed,
wherein the sample plate is accommodated in one of the first closed space, the sample for analysis transfer space, and the second closed space so that a state of non-exposure to the atmosphere is maintained, and separated from one of the first sample holder and the second sample holder inside the sample for analysis transfer space so as to be mounted on the other one.

In the integrated analysis system of the present disclosure, the sample plate is provided in a shape of a disc, a fixing hole through which a fastening means penetrates is formed at a center of the sample plate, an alignment hole for alignment of the sample plate is formed on the sample plate at a position spaced in a predetermined distance apart from the fixing hole, and a positioning marker for recognition of coordinate transformation between the first analyzing unit and the second analyzing unit is formed on the upper surface of the sample plate at a position spaced in a predetermined distance apart from the fixing hole.

In the integrated analysis system of the present disclosure, a plurality of grid lines that intersect perpendicularly to each other may be formed on the upper surface of the sample plate.

In the integrated analysis system of the present disclosure, the first sample holder may include a body having an upper surface on which the sample plate is mounted; a lower housing in which a lower end of the body is accommodated such that an upper end of the body protrudes to an upper part; and an upper housing configured to cover the upper surface of the body and coupled to an upper part of the lower housing to form the first closed space.

**In** the integrated analysis system of the present disclosure, a fixing groove into which the fastening means is inserted may be formed on the upper surface of the body at a position facing the fixing hole, and a first alignment protrusion which is inserted into the alignment hole may be formed on the upper surface of the body at a position facing the alignment hole.

**In** the integrated analysis system of the present disclosure, the fastening means may be provided as a bolt, threads may be formed on an inner circumferential surface of the fixing groove, and the fastening means and the fixing groove may be screwed to fix the sample plate onto the upper surface of the body.

**In** the integrated analysis system of the present disclosure, the second sample holder may include a mounting plate having an upper surface on which the sample plate is mounted; a stopper coupled to the upper surface of the mounting plate to form the second closed space; and a knob detachably coupled to an upper end of the stopper.

**In** the integrated analysis system of the present disclosure, a sample mounting area on which the sample plate is mounted may be formed on the upper surface of the mounting plate, a stopper insertion groove into which a lower end of the stopper is inserted may be formed on the upper surface of the mounting plate, and the stopper insertion groove may be formed in a shape of a closed loop to surround the sample mounting area.

**In** the integrated analysis system of the present disclosure, a second alignment protrusion which is inserted into the alignment hole may be formed in the sample mounting area at a position facing the alignment hole.

In the integrated analysis system of the present disclosure, the sample plate may be formed of a ferromagnetic material, and a magnetic fixing means configured to fix the sample plate with a magnetic force may be provided in the sample mounting area.

In the integrated analysis system of the present disclosure, a sealing member insertion groove into which a sealing member that is formed of an elastic material is inserted may be formed on an outer circumferential surface of the stopper, and the sealing member may be in close contact with an inner wall of the stopper insertion groove.

In the integrated analysis system of the present disclosure, an identification step may be formed on the outer circumferential surface of the stopper above the sealing member insertion groove.

In the integrated analysis system of the present disclosure, a fastening bolt for coupling with the stopper may be formed at a lower end of the knob, a fastening groove into which the fastening bolt is inserted may be formed on an upper surface of the stopper, and the fastening bolt and the fastening groove may be screwed to each other.

In the integrated analysis system of the present disclosure, a vacuum vent hole configured to relieve a vacuum generated in the second closed space may be provided on the upper surface of the stopper.

### Modes for Carrying Out the Invention

Hereinafter, example embodiments according to the present disclosure will be described in detail with reference to the accompanying drawings. In this process, the size or shape of components shown in the drawings may be exaggerated for clarity and convenience of explanation. In addition, terms specifically defined in consideration of configurations and operations of the present disclosure may vary depending on the intention or custom of a user or operator. Definitions of these terms should be made based on the context throughout this specification.

In the description of the present disclosure, it should be noted that orientation or positional relationships indicated by the terms such as "center", "upper", "lower", "left", "right", "vertical", "horizontal", "inside", "outside", "one side", and "the other side" are based on orientation or positional relationships shown in the drawings or orientation or positional relationships usually of disposition when a product of the present disclosure is used, are merely for the description and brief illustration of the present disclosure, and should not be construed as limiting the present disclosure because they are not suggesting or implying that the indicated apparatus or element must be configured or operated in the specified orientation with the specified orientation.

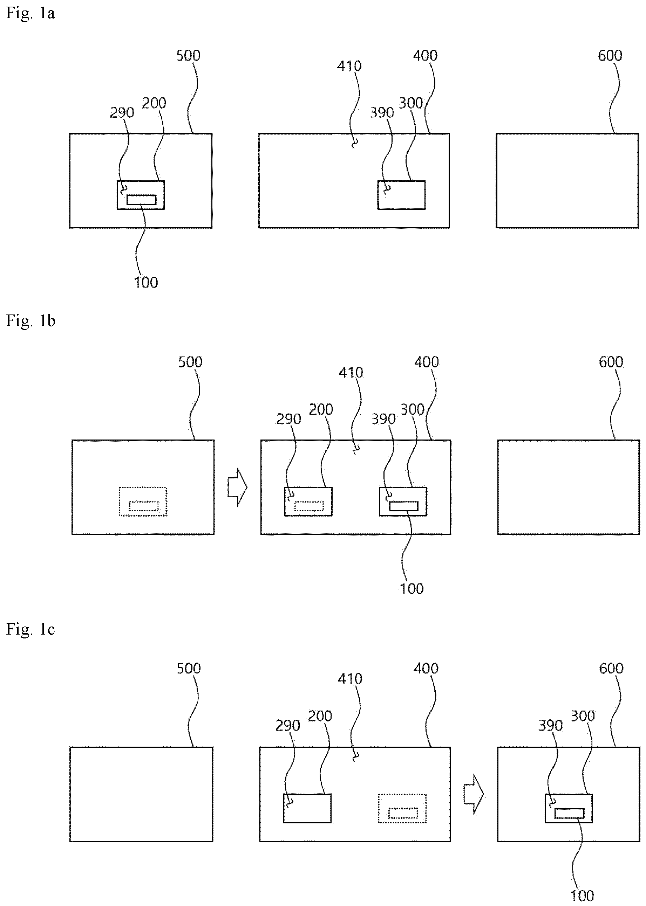

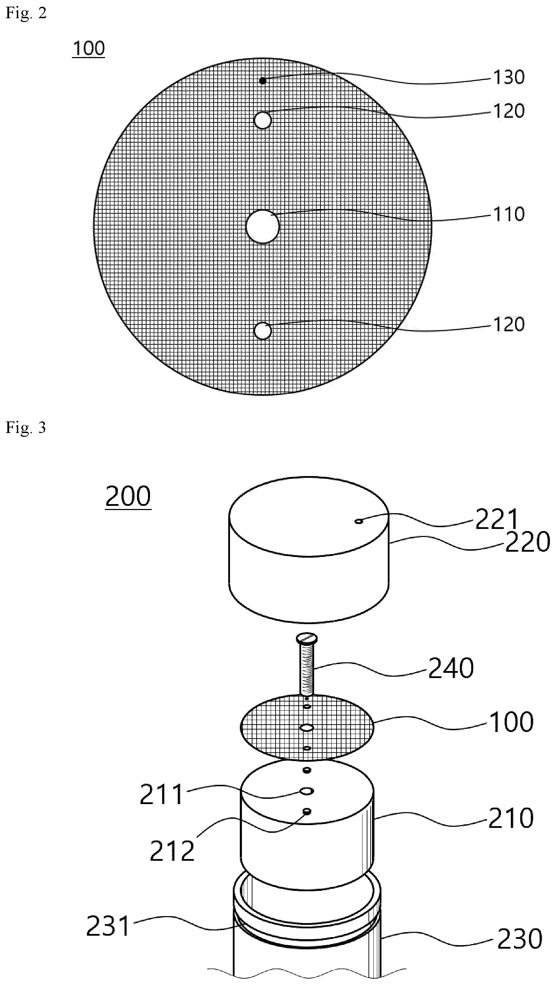

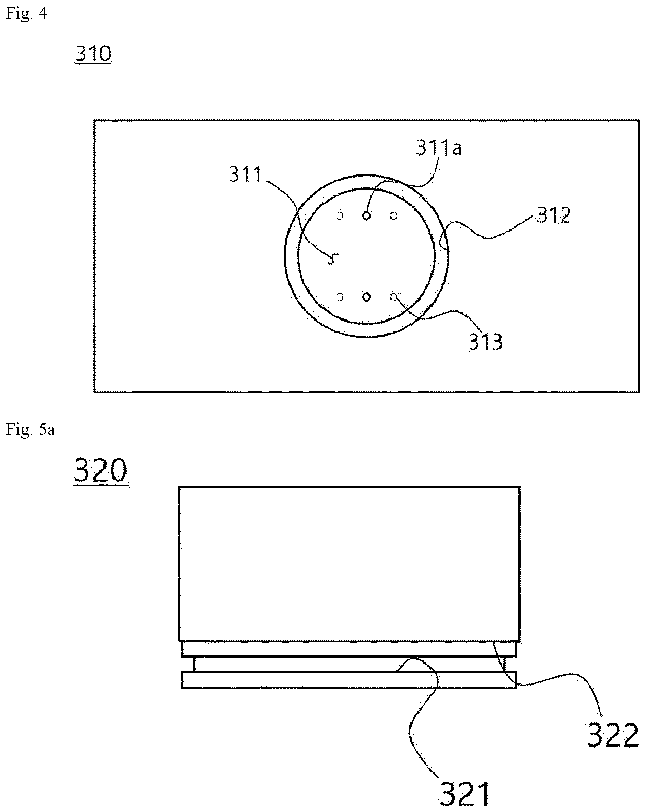

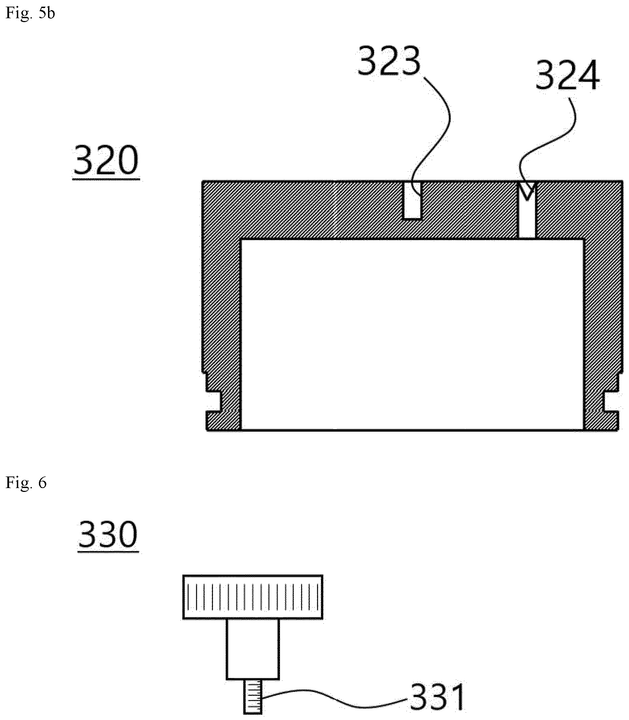

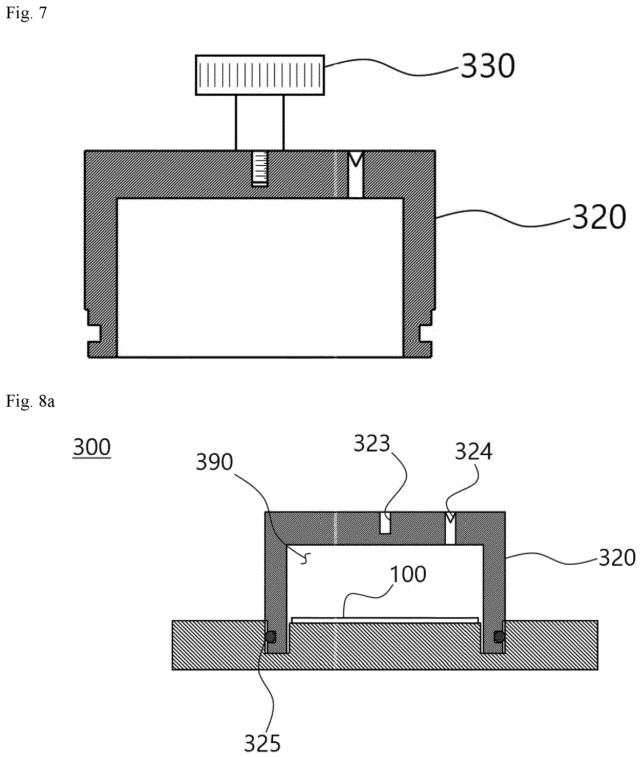

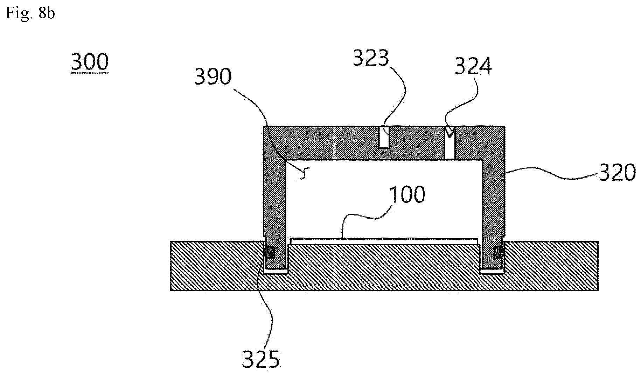

FIGS. 1a to 1c are block diagrams illustrating an FESEM and LDI-TOF-MS integrated analysis system of the present disclosure. FIG. 2 is a floor plan illustrating a sample plate 100. FIG. 3 is an exploded perspective view illustrating a first holder. FIG. 4 is a floor plan illustrating a mounting plate 310. FIG. 5a is a front view illustrating a stopper 320. FIG. 5b is a cross-sectional view illustrating the stopper 320. FIG. 6 is a front view illustrating a knob 330. FIG. 7 is a cross-sectional view illustrating a state in which the stopper 320 and the knob 330 are assembled. FIGS. 8a and 8b are cross-sectional views illustrating a state in which the mounting plate 310 and the stopper 320 are assembled.

Hereinafter, with reference to FIGS. 1a to 8b, the FESEM and LDI-TOF-MS integrated analysis system of the present disclosure will be described in detail.

In the process of sequentially performing FESEM and LDI-TOF-MS analyses, the FESEM and LDI-TOF-MS integrated analysis system of the present disclosure may prevent a sample for analysis from deteriorating, thereby making it possible to perform the two analyses under the same condition.

As shown in FIGS. 1a to 1c, the integrated analysis system of the present disclosure includes
a first sample holder 200 having a first closed space 290 formed therein;
a second sample holder 300 having a second closed space 390 formed therein;
a first analyzing unit 500 on which the first sample holder 200 is mounted and in which a first analysis is performed on a sample for analysis;
a second analyzing unit 600 on which the second sample holder 300 is mounted and in which a second analysis is performed on the sample for analysis;
a sample plate 100 which is mounted in the first closed space 290 in the first sample holder 200 or the second closed space 390 in the second sample holder 300, wherein the sample for analysis is mounted on an upper surface of the sample plate 100; and
a glove box unit 400 in which a sample for analysis transfer space 410 is formed,
wherein the sample plate 100 is accommodated in one of the first closed space 290, the sample for analysis transfer space 410, and the second closed space 390 so that a state of non-exposure to the atmosphere is maintained, and separated from one of the first sample holder 200 and the second sample holder 300 inside the sample for analysis transfer space 410 so as to be mounted on the other one

The first analyzing unit 500 may be a device for nondestructive analysis without damage to the sample during the analysis. The first analyzing unit 500 may be a device for FESEM analysis, FT-IR analysis, and XPS analysis. For example, when the first analyzing unit 500 is provided as an FESEM analysis device, the first analyzing unit 500 may be a JSM-7200F FESEM device of JEOL.

The second analyzing unit 600 may be both a nondestructive analysis device or a destructive analysis device regardless of sample damage during analysis. The second analyzing unit 600 may be a device for destructive analysis such as LDI-TOF-MS analysis, GD-MS analysis, LIBS analysis, and TOF-SIMS analysis, or nondestructive analysis such as FESEM analysis, FT-IR analysis, and XPS analysis. For example, when the second analyzing unit 600 is provided as an LDI-TOF-MS analysis device, it may be an IDSys Premier device of ASTA.

As shown in FIGS. 1a and 1b, the first sample holder 200 having the first closed space 290 formed therein is loaded or unloaded on the first analyzing unit 500 while accommodating the sample plate 100 in the first closed space 290.

As shown in FIGS. 1b and 1c, the second sample holder 300 having the second closed space 390 formed therein is loaded and unloaded on the second analyzing unit 600 while accommodating the sample plate 100 in the second closed space 390.

As shown in FIG. 1b, the process of mounting the sample plate 100 to the first sample holder 200 or the second sample holder 300, or separating the sample plate 100 from the first sample holder 200 or the second sample holder 300 is carried out in the sample for analysis transfer space 410 of the glove box unit 400 where a vacuum state is maintained, such that the sample for analysis in the FESEM and LDI-TOF-MS integrated analysis system of the present disclosure is kept under a state of non-exposure to the atmosphere and transferred between the two systems.

As shown in FIG. 2, the sample plate 100 is provided in a shape of a disc, a fixing hole 110 through which a fastening means 240 penetrates is formed at a center of the sample plate 100, an alignment hole 120 for alignment of the sample plate 100 is formed in the sample plate 100 at a position spaced in a predetermined distance apart from the fixing hole 110, and a positioning marker for recognition of coordinate transformation between the first analyzing unit 500 and the second analyzing unit 600 is formed on the upper surface of the sample plate 100 at a position spaced in a predetermined distance apart from the fixing hole 110.

The sample for analysis may be fixed onto the upper surface of the sample plate 100 at a predetermined position by an adhesive tape.

A plurality of alignment holes 120 may be provided, and more specifically, each alignment hole 120 may be spaced apart from each other with the fixed hole 110 interposed therebetween. For example, two alignment holes may be provided to be spaced apart from each other with the fixed hole 110 interposed therebetween on an imaginary straight line that passes through the center of the sample plate 100.

The positioning marker may be formed of a material recognizable by an optical sensor, an image sensor, and a camera. The first analyzing unit 500 and the second analyzing unit 600 may be provided with the optical sensor, the image sensor, and the camera configured to recognize coordinates between a position of the positioning marker and that of the fixing hole 110 on a two-dimensional plane formed on the upper surface of the sample plate 100.

Therefore, when the coordinate information between the two points described above and a point at which the measurement is performed is passed to the second analyzing unit 600 after sample analysis in the first analyzing unit 500, the second analyzing unit 600 may detect the position of a marker and the position of the fixed hole 110, and then the position where the measurement is performed in the first analyzing unit 500 may be calculated based on the coordinate information that is input from the first analyzing unit 500.

On the upper surface of the sample plate 100, a plurality of grid lines intersecting perpendicularly to each other may be formed.

As shown in FIG. 3, the first sample holder 200 may include a body 210 having an upper surface on which the sample plate 100 is mounted; a lower housing 230 in which a lower end of the body 210 is accommodated such that an upper end of the body 210 protrudes to an upper part; and an upper housing 220 configured to cover the upper surface of the body 210 and coupled to an upper part of the lower housing 230 to form the first closed space 290.

A fixing groove 211 into which the fastening means 240 is inserted may be formed on the upper surface of the body 210 at a position facing the fixing hole 110, and a first alignment protrusion 212 inserted into the alignment hole 120 may be formed on the upper surface of the body 210 at a position facing the alignment hole 120.

For example, the body 210 may be provided in a cylindrical shape, and the fixing groove 211 may be positioned at the center of the upper surface of the body 210 that is formed in a circular shape.

The fastening means 240 may be provided as a bolt, threads may be formed on an inner circumferential surface of the fixing groove 211, and the fastening means 240 and the fixing groove 211 may be screwed to fix the sample plate 100 onto the upper surface of the body 210. Since the first alignment protrusion 212 is inserted into the alignment hole 120, it is possible to prevent rotation of the sample plate 100 along with the fastening means 240 in the process of bolting the fastening means 240 to the fixing groove 211.

The lower housing 230 may be provided as a cylindrical container with an upper part opened. An outer circumferential surface of the body 210 may be in close contact with an inner circumferential surface of the lower housing 230.

On an outer circumferential surface of the lower housing 230, a groove 231 for inserting an O-ring for sealing may be formed. The O-ring may be in close contact with the outer circumferential surface of the lower housing 230 and an inner circumferential surface of the upper housing 220, and the lower housing 230 and the upper housing 220 may be coupled, such that it is possible to increase airtightness of the formed first closed space 290.

The upper housing 220 may also be provided in a cylindrical shape and may be a container with a lower part opened. An inner diameter of the upper housing 220 may be formed to be greater than an outer diameter of the lower housing 230, and the upper housing 220 may be configured to cover the upper part of the lower housing 230, thereby forming the first closed space 290.

On an upper surface of the upper housing 220, a ventilation hole 221 configured to relieve a vacuum in the first closed space 290 upon separation between the upper housing 220 and the lower housing 230 may be formed.

As shown in FIGS. 4 to 8b, the second sample holder 300 may include a mounting plate 310 having an upper surface on which the sample plate 100 is mounted; a stopper 320 coupled to the upper surface of the mounting plate 310 to form the second closed space 390; and a knob 330 detachably coupled to an upper end of the stopper 320.

As shown in FIG. 4, a sample mounting area 311 on which the sample plate 100 is mounted may be formed on the upper surface of the mounting plate 310, a stopper insertion groove 312 into which a lower end of the stopper 320 is inserted may be formed on the upper surface of the mounting plate 310, and the stopper insertion groove 312 may be formed by surrounding the sample mounting area 311 in a closed loop shape.

An inlet provided in the second analyzing unit 600 for entering of the second sample holder 300 into a measurement space formed inside the second analyzing unit 600 may be formed in a slit shape. Thus, the second sample holder 300 may be provided in a form that is thinner than a width of a slit-type inlet provided in the second analyzing unit 600. Specifically, the mounting plate 310, which is a body of the second sample holder 300, may be formed in a shape of a flat plate.

The sample mounting area 311 may be provided in a shape corresponding to the sample plate 100. That is, since the sample plate 100 is provided in a shape of a disc, the sample mounting area 311 may be provided in a circular shape.

In the sample mounting area 311, a second alignment protrusion 311a inserted into the alignment hole 120 may be formed at a position facing the alignment hole 120. The sample plate 100 may be mounted in position on the sample mounting area 311 by the second alignment protrusion 311a. The second alignment protrusion 311a may be provided to correspond to the position and number of alignment holes 120. For example, if two alignment holes 120 are provided, two second alignment protrusions 311a may also be provided, so that each of the two second alignment protrusions 311a may be positioned respectively to face the position of each of the two alignment holes 120.

The sample plate 100 may be formed of a ferromagnetic material, and a magnetic fixing means 313 configured to fix the sample plate 100 with a magnetic force may be provided in the sample mounting area 311. The magnetic fixing means 313 may be provided in a state completely embedded in the upper surface of the mounting plate 310 so as not to protrude on the sample mounting area 311.

A plurality of magnetic fixing means 313 may be provided. For example, the magnetic fixing means 313 may be provided in the two times greater number than that of the second alignment protrusions 311a, and a pair of magnetic fixing means 313 may be spaced apart from each other with the second alignment protrusion 311a interposed therebetween. For example, four magnetic fixing means 313 may be provided.

As shown in FIGS. 5a and 5b, a sealing member insertion groove 321 into which a sealing member 325 that is formed of an elastic material is inserted may be formed on an outer circumferential surface of the stopper 320, and the sealing member 325 may be in close contact with an inner wall of the stopper insertion groove 312. Specifically, the sealing member 325 may be in close contact with the inner wall of the stopper insertion groove 312 while being inserted into the sealing member insertion groove 321. In other words, as shown in FIGS. 8a and 8b, in a state in which the outer circumferential surface of the stopper 320 and the inner wall of the stopper insertion groove 312 face each other, the sealing member 325 may be interposed therebetween.

On the outer circumferential surface of the stopper 320, an identification step 322 may be formed above the sealing member insertion groove 321. The identification step 322 may be configured for visual identification of a coupling state of the stopper 320. As shown in FIG. 8b, if the stopper 320 is not inserted all the way into the stopper insertion groove 312, the identification step 322 is visually identified, making it noticeable that the stopper 320 is not fully coupled to the mounting plate 310. As shown in FIG. 8a, if the stopper 320 is completely coupled to the mounting plate 310, the identification step 322 disappears from the view to be recognized that the complete coupling is made. As described above, since an inlet of the second analyzing unit 600 is formed in the form of a slit, incomplete coupling of the stopper 320 may cause a problem in the loading of the second sample holder 300 in the second analyzing unit 600. The identification step 322 may prevent the problem.

On an upper surface of the stopper 320, a vacuum vent hole 324 configured to relieve a vacuum formed in the second closed space 390 may be provided.

As shown in FIG. 6, a fastening bolt 331 configured for coupling with the stopper 320 may be formed at a lower end of the knob 330, a fastening groove 323 into which the fastening bolt 331 is inserted may be formed on the upper surface of the stopper 320, and the fastening bolt 331 and the fastening groove 323 may be screwed to each other. As described above, the stopper 320 has a height limit, which may cause difficulty in separating the stopper 320. Therefore, when separating the stopper 320 from the mounting plate 310, by mounting the knob 330 to the stopper 320, it is possible to easily separate the stopper 320 from the mounting plate 310.

Although the example embodiments according to the present disclosure have been described above, these are merely exemplary, and those skilled in the art will understand that various modifications and equivalent ranges of the example embodiments are possible therefrom. Accordingly, the scope for true technical protection of the present disclosure should be defined by the appended claims.

### [Description of Symbols]

100...Sample plate, 110...Fixing hole, 120... Alignment hole, 130...Positioning marker, 140...Grid line, 200...First sample holder, 210...Body, 211... Fixing groove, 212...First alignment protrusion, 220...Upper housing, 230...Lower housing, 240...Fastening means, 290... First closed space, 300...Second sample holder, 310... Mounting plate, 311...Sample mounting area, 311a...Second alignment protrusion, 312...Stopper insertion groove, 313...Magnetic fixing means, 320... Stopper, 321...Sealing member insertion groove, 322...Identification step, 323... Fastening groove, 324...Vacuum vent hole, 325... Sealing member, 330...Knob, 331... Fastening bolt, 390...Second closed space, 400...Glove box unit, 410...Sample transfer space, 500...First analyzing unit, 600... Second analyzing unit

### Industrial Applicability

In an FESEM and LDI-TOF-MS integrated analysis system of the present disclosure, in performing FESEM and LDI-TOF-MS analysis on a single sample, it is possible to keep an analyzing position on a sample, prevent damage to the sample during the transfer, and maintain a state of non-exposure to the atmosphere.

The FESEM and LDI-TOF-MS integrated analysis system of the present disclosure may be capable of LDI-TOF-MS analysis on the same area on the sample that is analyzed via FESEM by positioning marking.

In the FESEM and LDI-TOF-MS integrated analysis system of the present disclosure, it may be easy to maintain a state of the sample, such as maintenance of a state of non-exposure to the atmosphere in the transfer between two systems.

## Claims

1. An integrated analysis system comprising:
a first sample holder (200) having a first closed space (290) formed therein;
a second sample holder (300) having a second closed space (390) formed therein;
a first analyzing unit (500) on which the first sample holder (200) is mounted and in which a first analysis is performed on a sample for analysis;
a second analyzing unit (600) on which the second sample holder (300) is mounted and in which a second analysis is performed on the sample for analysis;
a sample plate (100) which is mounted in the first closed space (290) in the first sample holder (200) or the second closed space (390) in the second sample holder (300), wherein the sample for analysis is mounted on an upper surface of the sample plate (100); and
a glove box unit (400) in which a sample for analysis transfer space is formed,
wherein the sample plate (100) is accommodated in one of the first closed space (290), the sample for analysis transfer space, and the second closed space (390) so that a state of non-exposure to an atmosphere is maintained, and separated from one of the first sample holder (200) and the second sample holder (300) inside the sample for analysis transfer space so as to be mounted on the other one, wherein the sample plate (100) is provided in a shape of a disc,
a fixing hole (110) through which a fastening means penetrates is formed at a center of the sample plate (100), and
an alignment hole (120) for alignment of the sample plate (100) is formed on the sample plate (100) at a position spaced in a predetermined distance apart from the fixing hole (110),
wherein a positioning marker for recognition of coordinate transformation between the first analyzing unit (500) and the second analyzing unit (600) is formed on the upper surface of the sample plate (100) at a position spaced in a predetermined distance apart from the fixing hole (110).

2. The integrated analysis system of claim 1, wherein a plurality of grid lines that intersect perpendicularly to each other are formed on the upper surface of the sample plate (100).

3. The integrated analysis system of claim 1, wherein the first sample holder (200) comprises:
a body (210) having an upper surface on which the sample plate (100) is mounted;
a lower housing in which a lower end of the body (210) is accommodated such that an upper end of the body protrudes to an upper part; and
an upper housing (220) configured to cover the upper surface of the body (210) and coupled to an upper part of the lower housing to form the first closed space (290).

4. The integrated analysis system of claim 3, wherein a fixing groove (211) into which the fastening means is inserted is formed on the upper surface of the body (210) at a position facing the fixing hole (110), and
a first alignment protrusion (212) which is inserted into the alignment hole (120) is formed on the upper surface of the body (210) at a position facing the alignment hole (120).

5. The integrated analysis system of claim 4, wherein the fastening means is provided as a bolt,
threads are formed on an inner circumferential surface of the fixing groove (211), and
the fastening means and the fixing groove (211) are screwed to fix the sample plate (100) onto the upper surface of the body (210).

6. The integrated analysis system of claim 3, wherein the second sample holder (300) comprises:
a mounting plate (310) having an upper surface on which the sample plate (100) is mounted;
a stopper (320) coupled to the upper surface of the mounting plate (310) to form the second closed space (390); and
a knob (330) detachably coupled to an upper end of the stopper (320).

7. The integrated analysis system of claim 6, wherein a sample mounting area (311) on which the sample plate (100) is mounted is formed on the upper surface of the mounting plate (310),
a stopper insertion groove (312) into which a lower end of the stopper (320) is inserted is formed on the upper surface of the mounting plate (310), and
the stopper insertion groove (312) is formed in a shape of a closed loop to surround the sample mounting area (311).

8. The integrated analysis system of claim 7, wherein a second alignment protrusion (311a) which is inserted into the alignment hole (120) is formed in the sample mounting area (311) at a position facing the alignment hole (120).

9. The integrated analysis system of claim 7, wherein the sample plate (100) is formed of a ferromagnetic material, and
a magnetic fixing means configured to fix the sample plate (100) with a magnetic force is provided in the sample mounting area (311).

10. The integrated analysis system of claim 7, wherein a sealing member (325) insertion groove into which a sealing member (325) that is formed of an elastic material is inserted is formed on an outer circumferential surface of the stopper (320), and
the sealing member (325) is in close contact with an inner wall of the stopper insertion groove (312).

11. The integrated analysis system of claim 10, wherein an identification step (322) is formed on the outer circumferential surface of the stopper (320) above the sealing member (325) insertion groove.

12. The integrated analysis system of claim 6, wherein a fastening bolt (331) for coupling with the stopper (320) is formed at a lower end of the knob (330),
a fastening groove (323) into which the fastening bolt (331) is inserted is formed on an upper surface of the stopper (320), and
the fastening bolt (331) and the fastening groove (323) are screwed to each other.

13. The integrated analysis system of claim 6, wherein a vacuum vent hole (324) configured to relieve a vacuum generated in the second closed space (390) is provided on an upper surface of the stopper (320).

## Patentansprüche

1. Integriertes Analysesystem, umfassend:
einen ersten Probenhalter (200) mit einem darin ausgebildeten ersten geschlossenen Raum (290);
einen zweiten Probenhalter (300) mit einem darin ausgebildeten zweiten geschlossenen Raum (390);
eine erste Analyseeinheit (500), auf der der erste Probenhalter (200) montiert ist und in der eine erste Analyse an einer zu analysierenden Probe durchgeführt wird;
eine zweite Analyseeinheit (600), auf der der zweite Probenhalter (300) montiert ist und in der eine zweite Analyse an der zu analysierenden Probe durchgeführt wird;
eine Probenplatte (100), die in dem ersten geschlossenen Raum (290) in dem ersten Probenhalter (200) oder dem zweiten geschlossenen Raum (390) in dem zweiten Probenhalter (300) montiert ist, wobei die zu analysierende Probe auf einer oberen Oberfläche der Probenplatte (100) montiert ist; und
eine Ablageeinheit (400), in der ein zu analysierender Probentransferraum ausgebildet ist,
wobei die Probenplatte (100) in einem von dem ersten geschlossenen Raum (290), dem zu analysierenden Probentransferraum und dem zweiten geschlossenen Raum (390) aufgenommen ist, so dass ein Zustand der Nichtexposition gegenüber einer Atmosphäre aufrechterhalten wird, und von einem von dem ersten Probenhalter (200) und dem zweiten Probenhalter (300) innerhalb des zu analysierenden Probentransferraums getrennt ist, um auf dem anderen montiert zu werden, wobei die Probenplatte (100) in Form einer Scheibe bereitgestellt ist,
ein Befestigungsloch (110), durch das ein Befestigungsmittel eindringt, in einer Mitte der Probenplatte (100) ausgebildet ist, und
ein Ausrichtungsloch (120) zur Ausrichtung der Probenplatte (100) auf der Probenplatte (100) an einer Position ausgebildet ist, die in einem vorbestimmten Abstand von dem Befestigungsloch (110) beabstandet ist,
wobei eine Positionierungsmarkierung zur Erkennung einer Koordinatentransformation zwischen der ersten Analyseeinheit (500) und der zweiten Analyseeinheit (600) auf der oberen Oberfläche der Probenplatte (100) an einer Position ausgebildet ist, die in einem vorbestimmten Abstand von dem Befestigungsloch (110) beabstandet ist.

2. Integriertes Analysesystem nach Anspruch 1, wobei eine Vielzahl von Gitterlinien, die sich senkrecht zueinander schneiden, auf der oberen Oberfläche der Probenplatte (100) ausgebildet sind.

3. Integriertes Analysesystem nach Anspruch 1, wobei der erste Probenhalter (200) umfasst:
einen Körper (210) mit einer oberen Oberfläche, auf der die Probenplatte (100) montiert ist;
ein unteres Gehäuse, in dem ein unteres Ende des Körpers (210) aufgenommen ist, so dass ein oberes Ende des Körpers zu einem oberen Teil vorsteht; und
ein oberes Gehäuse (220), das konfiguriert ist, um die obere Oberfläche des Körpers (210) abzudecken und mit einem oberen Teil des unteren Gehäuses gekoppelt ist, um den ersten geschlossenen Raum (290) zu bilden.

4. Integriertes Analysesystem nach Anspruch 3, wobei eine Befestigungsnut (211), in die das Befestigungsmittel eingeführt wird, auf der oberen Oberfläche des Körpers (210) an einer Position ausgebildet ist, die dem Befestigungsloch (110) zugewandt ist, und
ein erster Ausrichtungsvorsprung (212), der in das Ausrichtungsloch (120) eingeführt wird, auf der oberen Oberfläche des Körpers (210) an einer Position ausgebildet ist, die dem Ausrichtungsloch (120) zugewandt ist.

5. Integriertes Analysesystem nach Anspruch 4, wobei das Befestigungsmittel als ein Bolzen bereitgestellt ist,
Gewinde auf einer inneren umlaufenden Oberfläche der Befestigungsnut (211) ausgebildet sind, und
das Befestigungsmittel und die Befestigungsnut (211) geschraubt sind, um die Probenplatte (100) auf der oberen Oberfläche des Körpers (210) zu befestigen.

6. Integriertes Analysesystem nach Anspruch 3, wobei der zweite Probenhalter (300) umfasst:
eine Montageplatte (310) mit einer oberen Oberfläche, auf der die Probenplatte (100) montiert ist;
einen Stopper (320), der mit der oberen Oberfläche der Montageplatte (310) gekoppelt ist, um den zweiten geschlossenen Raum (390) zu bilden; und
einen Knopf (330), der abnehmbar mit einem oberen Ende des Stoppers (320) gekoppelt ist.

7. Integriertes Analysesystem nach Anspruch 6, wobei ein Probenmontagebereich (311), auf dem die Probenplatte (100) montiert ist, auf der oberen Oberfläche der Montageplatte (310) ausgebildet ist,
eine Stoppereinführnut (312), in die ein unteres Ende des Stoppers (320) eingeführt wird, auf der oberen Oberfläche der Montageplatte (310) ausgebildet ist, und
die Stoppereinführnut (312) in Form einer geschlossenen Schleife ausgebildet ist, um den Probenmontagebereich (311) zu umgeben.

8. Integriertes Analysesystem nach Anspruch 7, wobei ein zweiter Ausrichtungsvorsprung (311a), der in das Ausrichtungsloch (120) eingeführt wird, in dem Probenmontagebereich (311) an einer Position ausgebildet ist, die dem Ausrichtungsloch (120) zugewandt ist.

9. Integriertes Analysesystem nach Anspruch 7, wobei die Probenplatte (100) aus einem ferromagnetischen Material ausgebildet ist, und
ein magnetisches Befestigungsmittel, das konfiguriert ist, um die Probenplatte (100) mit einer magnetischen Kraft zu befestigen, in dem Probenmontagebereich (311) vorgesehen ist.

10. Integriertes Analysesystem nach Anspruch 7, wobei eine Dichtungselement (325)-Einführnut, in die ein Dichtungselement (325), das aus einem elastischen Material ausgebildet ist, eingeführt wird, auf einer äußeren umlaufenden Oberfläche des Stoppers (320) ausgebildet ist, und
das Dichtungselement (325) in engem Kontakt mit einer Innenwand der Stoppereinführnut (312) ist.

11. Integriertes Analysesystem nach Anspruch 10, wobei eine Identifizierungsstufe (322) auf der äußeren umlaufenden Oberfläche des Stoppers (320) über der Dichtungselement (325)-Einführnut ausgebildet ist.

12. Integriertes Analysesystem nach Anspruch 6, wobei ein Befestigungsbolzen (331) zum Koppeln mit dem Stopper (320) an einem unteren Ende des Knopfes (330) ausgebildet ist,
eine Befestigungsnut (323), in die der Befestigungsbolzen (331) eingeführt wird, auf einer oberen Oberfläche des Stoppers (320) ausgebildet ist, und
der Befestigungsbolzen (331) und die Befestigungsnut (323) miteinander verschraubt sind.

13. Integriertes Analysesystem nach Anspruch 6, wobei ein Vakuumentlüftungsloch (324), das konfiguriert ist, um ein in dem zweiten geschlossenen Raum (390) erzeugtes Vakuum zu entlasten, auf einer oberen Oberfläche des Stoppers (320) vorgesehen ist.

## Revendications

1. Système d'analyse intégré comportant :
un premier porte-échantillon (200) ayant un premier espace fermé (290) formé dans celui-ci ;
un deuxième porte-échantillon (300) ayant un deuxième espace fermé (390) formé dans celui-ci ;
une première unité d'analyse (500) sur laquelle le premier porte-échantillon (200) est monté et dans laquelle une première analyse est effectuée sur un échantillon à analyser ;
une deuxième unité d'analyse (600) sur laquelle le deuxième porte-échantillon (300) est monté et dans laquelle une deuxième analyse est effectuée sur l'échantillon à analyser ;
une plaque d'échantillon (100) qui est montée dans le premier espace fermé (290) dans le premier porte-échantillon (200) ou dans le deuxième espace fermé (390) dans le deuxième porte-échantillon (300), dans lequel l'échantillon à analyser est monté sur une surface supérieure de la plaque d'échantillon (100) ; et
une unité formant boîte à gants (400) dans laquelle un espace de transfert d'échantillon à analyser est formé,
dans lequel la plaque d'échantillon (100) est logée dans l'un parmi le premier espace fermé (290), l'espace de transfert d'échantillon à analyser et le deuxième espace fermé (390) de telle sorte qu'un état de non-exposition à l'atmosphère est maintenu, et séparée du premier porte-échantillon (200) et du deuxième porte-échantillon (300) à l'intérieur de l'espace de transfert d'échantillon à analyser de manière à être montée sur l'autre, dans lequel la plaque d'échantillon (100) est mise en œuvre sous la forme d'un disque,
un trou de fixation (110) au travers duquel un moyen de fixation pénètre est formé au niveau du centre de la plaque d'échantillon (100), et
un trou d'alignement (120) servant à des fins d'alignement de la plaque d'échantillon (100) est formé sur la plaque d'échantillon (100) au niveau d'une position espacée selon une distance prédéterminée par rapport au trou de fixation (110),
dans lequel un marqueur de positionnement servant à la reconnaissance de la transformation de coordonnées entre la première unité d'analyse (500) et la deuxième unité d'analyse (600) est formé sur la surface supérieure de la plaque d'échantillon (100) au niveau d'une position espacée selon une distance prédéterminée par rapport au trou de fixation (110).

2. Système d'analyse intégré selon la revendication 1, dans lequel les lignes d'une pluralité de lignes de grille qui se croisent perpendiculairement les unes par rapport aux autres sont formées sur la surface supérieure de la plaque d'échantillon (100).

3. Système d'analyse intégré selon la revendication 1, dans lequel le premier porte-échantillon (200) comporte :
un corps (210) ayant une surface supérieure sur laquelle la plaque d'échantillon (100) est montée ;
un logement inférieur dans lequel une extrémité inférieure du corps (210) est logée de telle sorte qu'une extrémité supérieure du corps fait saillie jusqu'à une partie supérieure ; et
un logement supérieur (220) configuré pour recouvrir la surface supérieure du corps (210) et accouplé à une partie supérieure du logement inférieur pour former le premier espace fermé (290).

4. Système d'analyse intégré selon la revendication 3, dans lequel une rainure de fixation (211) dans laquelle le moyen de fixation est inséré est formée sur la surface supérieure du corps (210) au niveau d'une position faisant face au trou de fixation (110), et
une première partie saillante d'alignement (212) qui est insérée dans le trou d'alignement (120) est formée sur la surface supérieure du corps (210) au niveau d'une position faisant face au trou d'alignement (120).

5. Système d'analyse intégré selon la revendication 4, dans lequel le moyen de fixation est mis en œuvre sous la forme d'un boulon,
des filets sont formés sur une surface circonférentielle intérieure de la rainure de fixation (211), et
le moyen de fixation et la rainure de fixation (211) sont vissés pour fixer la plaque d'échantillon (100) sur la surface supérieure du corps (210).

6. Système d'analyse intégré selon la revendication 3, dans lequel le deuxième porte-échantillon (300) comporte :
une plaque de montage (310) ayant une surface supérieure sur laquelle la plaque d'échantillon (100) est montée ;
une butée (320) accouplée à la surface supérieure de la plaque de montage (310) pour former le deuxième espace fermé (390) ; et
un bouton (330) accouplé de manière amovible au niveau d'une extrémité supérieure de la butée (320).

7. Système d'analyse intégré selon la revendication 6, dans lequel une zone de montage d'échantillon (311) sur laquelle la plaque d'échantillon (100) est montée est formée sur la surface supérieure de la plaque de montage (310),
une rainure d'insertion de butée (312) dans laquelle une extrémité inférieure de la butée (320) est insérée est formée sur la surface supérieure de la plaque de montage (310), et
la rainure d'insertion de butée (312) a la forme d'une boucle fermée servant à entourer la zone de montage d'échantillon (311).

8. Système d'analyse intégré selon la revendication 7, dans lequel une deuxième partie saillante d'alignement (311a) qui est insérée dans le trou d'alignement (120) est formée dans la zone de montage d'échantillon (311) au niveau d'une position faisant face au trou d'alignement (120).

9. Système d'analyse intégré selon la revendication 7, dans lequel la plaque d'échantillon (100) est formée à partir d'un matériau ferromagnétique, et
un moyen de fixation magnétique configuré pour fixer la plaque d'échantillon (100) avec une force magnétique est mis en œuvre dans la zone de montage d'échantillon (311).

10. Système d'analyse intégré selon la revendication 7, dans lequel une rainure d'insertion d'élément d'étanchéité (325) dans laquelle un élément d'étanchéité (325) qui est formé à partir d'un matériau élastique est inséré est formée sur une surface circonférentielle extérieure de la butée (320), et
l'élément d'étanchéité (325) est en contact étroit avec une paroi intérieure de la rainure d'insertion de butée (312).

11. Système d'analyse intégré selon la revendication 10, dans lequel un étage d'identification (322) est formé sur la surface circonférentielle extérieure de la butée (320) au-dessus de la rainure d'insertion de l'élément d'étanchéité (325).

12. Système d'analyse intégré selon la revendication 6, dans lequel un boulon de fixation (331) destiné à être accouplé à la butée (320) est formé au niveau d'une extrémité inférieure du bouton (330),
une rainure de fixation (323) dans laquelle le boulon de fixation (331) est inséré est formée sur une surface supérieure de la butée (320), et
le boulon de fixation (331) et la rainure de fixation (323) sont vissés l'un par rapport à l'autre.

13. Système d'analyse intégré selon la revendication 6, dans lequel un trou d'évent de vide (324) configuré pour libérer un vide généré dans le deuxième espace fermé (390) est mis en œuvre sur une surface supérieure de la butée (320).
